# EUROPÄISCHE PATENTANMELDUNG

(11) **EP 4 406 765 A1**
(43) Veröffentlichungstag der Anmeldung: **31.07.2024**
(21) Anmeldenummer: 24152187.1
(22) Anmeldetag: 16.01.2024
(51) Int. Cl.: B60K 7/00, B60K 17/04

(54) **NUTZFAHRZEUG MIT ELEKTRISCHEM ANTRIEBSMOTOR**

(30) Priorität: 20.01.2023 DE 102023101454
(71) Anmelder: GIGANT GmbH, 49413 Dinklage (DE)
(72) Erfinder: Brunnberg, Klaus, 49377 Vechta (DE)
(74) Vertreter: Weeg, Thomas

(57) **Zusammenfassung**

Um einen elektrischen Antriebsmotor (20) günstig im Nutzfahrzeug (2) anzuordnen, wird vorgeschlagen, dass der zumindest eine elektrische Antriebsmotor (20) in einer Höhenlage (E_{M}) angeordnet ist, in der sich dieser zumindest teilweise auf der Höhenlage (E₁, E₂) der Lagerböcke (8) befindet, der zumindest eine elektrische Antriebsmotor (20) seitlich versetzt neben einem benachbarten Lagerbock (8) auf dessen zur Längsmittelachse (M) des Nutzfahrzeugs (2) gerichteten Seite angeordnet ist, und der Antriebsstrang (22) von dem zumindest einen elektrischen Antriebsmotor (20) aus zumindest abschnittweise entlang der Haupterstreckungsrichtung (H) des mit dem benachbarten Lagerbock (8) verbundenen Lenkerarms (10) verläuft.

## Beschreibung

Die vorliegende Erfindung bezeiht sich auf ein Nutzfahrzeug mit einem elektrischen Fahrantrieb nach dem Oberbegriff des Anspruchs 1.

Aus der Schrift WO 2021/008653 A1 ist ein Nutzfahrzeug mit einem elektrischen Fahrantrieb bekannt, bei dem ein Elektromotor zum Antrieb eines von einem Achskörper einer Fahrzeugachse gehaltenen Rades auf den Achskörper außenseitig aufgesetzt ist. Auf den Elektromotor ist nach außen hin noch der Radkopf aufgesetzt, an dem das vom Elektromotor angetriebene Rad befestigt ist. Dem Elektromotor ist ein außerdem ein mehrstufiges Getriebe zugeordnet, mit dem die Drehzahlen des Elektromotors auf Drehzahlen über- oder untersetzt werden, die der jeweiligen Fahrgeschwindigkeit entsprechen, mit denen das Nutzfahrzeug bewegt wird.

Aus der Schrift DE 10 2019 112 739 A1 ist ein Achskörper für ein Nutzfahrzeug bekannt, in den zwei Elektromotoren eingebaut sind, um damit an den gegenüberliegenden Enden des Achskörpers befestigte Räder anzutreiben. Aufgrund der ständigen Federbewegungen des Achskörpers bei der Fahrt des Nutzfahrzeugs sind die Elektromotoren ständig belastet. Zudem wird das Fahrverhalten durch die hohen ungefederten Massen nachteilig beeinflusst.

Es ist die Aufgabe der vorliegenden Erfindung, die Anordnung der Elektromotoren zu verbessern.

Die Aufgabe wird für ein gattungsgemäßes Nutzfahrzeug durch die kennzeichnenden Merkmale des Anspruchs 1 gelöst.

Wenn der zumindest eine elektrische Antriebsmotor in einer Höhenlage angeordnet ist, in der sich dieser zumindest teilweise auf der Höhenlage der Lagerböcke befindet, reduzieren sich die ungefederten Massen im Fahrwerk. Da der elektrische Antriebsmotor in dieser Position nicht mehr auf der Höhenlage der Räder, sondern weiter oben in Höhenlage des Lagerbocks angeordnet ist, wird die Belastung des elektrischen Antriebsmotors aufgrund der Beschleunigungen verringert, die bei der Fahrt des Nutzfahrzeugs durch Federbewegungen ständig auftreten. Durch die hohe Einbaulage ist der elektrische Antriebsmotor auch besser gegen Beschädigungen durch Steine und andere Fremdkörper geschützt, die vom Fahrwerk des Nutzfahrzeugs aufgewirbelt werden. Auch das Risiko, dass der elektrische Antriebsmotor bei der Fahrt mit dem Boden kollidieren könnte, ist verringert. Schließlich ist der Antriebsmotor in der höheren Einbaulage auch weniger der Witterung, Streusalz und Nässe ausgesetzt, weil er in der höheren Position zumindest von oben her durch den Rahmen und die darauf aufgesetzten Aufbauten des Nutzfahrzeugs besser geschützt wird. Das gilt auch für die Stromkabel und elektrischen Anschlüsse, die zur Energieversorgung und zur Steuerung und Regelung des elektrischen Antriebsmotors erforderlich sind.

Im Rahmen der vorliegenden Erfindung kann ein einziger elektrischer Antriebsmotor verwendet sein, der nur einen einzigen Endabtrieb antreibt und an den demgemäß nur ein einziger Antriebsstrang angeschlossen ist. Von einem elektrischen Antriebsmotor können aber auch zwei Endabtriebe angetrieben sein. Dazu sind dann zwei Antriebsstränge mit dem elektrischen Motor antriebsverbunden. Die beiden Antriebsstränge können sich auf gegenüberliegenden Seiten des Nutzfahrzeugs befinden und Räder antreiben, die zu einer Nutzfahrzeugachse gehören, wobei die Räder nicht durch eine physische Achse miteinander verbunden sein müssen, sondern auch eine Einzelradaufhängung für die Räder vorgesehen sein kann. Schließlich ist es auch möglich, beispielsweise zwei elektrische Antriebsmotoren zu verwenden, die jeweils über einen Antriebsstrang mit einem Endabtrieb verbunden sind. In diesem Fall ist es möglich, dass dann zumindest ein Rad auf gegenüberliegenden Seiten des Nutzfahrzeugs seinen eigenen Antrieb hat. Die einzelnen angetriebenen Räder können durch eine physische Achse miteinander verbunden sein, es ist aber auch möglich, auf ein klassisches Achsrohr zu verzichten und die Räder an einer Einzelradaufhängung zu führen.

Mit dem Begriff des Endabtriebs ist das Bauteil gemeint, mit dem die auf den jeweiligen Radkopf montierten Räder unmittelbar angetrieben sind. Der Antriebsstrang ist das Bauteil, das eine Antriebskraft von der Abtriebswelle des elektrischen Antriebsmotors abnimmt und diese bis zum Endabtrieb überträgt.

Der zumindest eine elektrische Antriebsmotor ist seitlich versetzt neben einem benachbarten Lagerbock auf dessen zur Längsmittelachse des Nutzfahrzeugs gerichteten Seite angeordnet. In dieser Position wird der elektrische Antriebsmotor auch zur Außenseite des Nutzfahrzeugs hin zumindest teilweise vom benachbarten Lagerbock gegen von außen einwirkende Einflüsse geschützt. In dieser Position liegt der elektrische Antriebsmotor auch näher zur Längsmittelachse des Nutzfahrzeugs. Durch die Nähe zur Längsmittelachse ist das Nutzfahrzeug besser ausbalanciert und zeigt ein ausgeglicheneres Fahrverhalten im Verhältnis zu einer Anordnung des elektrischen Antriebsmotors in einer Position, die weiter außen zur Längsmittelachse liegt. Wenn nur ein einziger elektrischer Antriebsmotor verwendet ist, kann dieser so im Nutzfahrzeug positioniert sein, dass sich sein Schwerpunkt zumindest annähernd oder genau über oder unter der Längsmittelachse des Nutzfahrzeugs befindet, damit das Nutzfahrzeug gut ausbalanciert ist.

Der Antriebsstrang verläuft von dem zumindest einen elektrischen Antriebsmotor aus zumindest abschnittweise entlang der Haupterstreckungsrichtung des mit dem benachbarten Lagerbock verbundenen Lenkerarms. Bei zwei separaten Antriebssträngen können diese jeweils entlang eines Lenkerarms verlaufen. Da der Lenkerarm durch seine Anordnung und Lage die Bewegungen des damit verbundenen Radkopfes und des daran befestigten Rades bestimmt, ist es vorteilhaft, wenn auch der Antriebsstrang der Haupterstreckungsrichtung des Lenkerarms folgend ausgerichtet ist. Der Antriebsstrang kann dadurch den Bewegungen des Lenkerarms zumindest annähernd folgen.

Bei der vorgeschlagenen Positionierung des Antriebsmotors liegen die Drehachsen der Lenkerbolzen und die Abtriebswelle des Elektromotors möglichst nah beieinander. Es ergeben sich dann bei Ein- oder Ausfederbewegungen des Lenkerarms keine oder allenfalls geringe Längendifferenzen in den Abständen des Lenkerarms von der Drehachse, um die der Lenkerarm schwenkbeweglich im Lagerbock gehalten ist, bis zum Radkopf und des Antriebsstrangs vom Elektromotor zum Radkopf, wenn der Lenkerarm mit seinem freien Ende um die Drehachse ein- oder ausfedert. Der technische Aufwand, der getrieben werden muss, um eventuelle Längendifferenzen auszugleichen, kann dadurch gering gehalten werden. Auch werden nachteilige Einflüsse auf das Fahrverhalten bei Ein- oder Ausfederbewegungen vermieden oder zumindest erheblich verringert.

Für die Erfindung spielt es keine Rolle, ob der Lenkerarm in einer Guss- oder Schweißkonstruktion ausgeführt ist. Hier kann unter Zweckmäßigkeitserwägungen eine der beiden Möglichkeiten ausgewählt werden.

Nach einer Ausgestaltung der Erfindung ist der zumindest eine elektrische Antriebsmotor mit einer Ausrichtung im Nutzfahrzeug angeordnet, in der sich dessen Abtriebswelle in einer Richtung quer zur Längsmittelachse des Nutzfahrzeugs erstreckt, und die Abtriebswelle des elektrischen Antriebsmotors ist konzentrisch zur Drehachse, um die der Lenkerarm schwenkbeweglich im Lagerbock gehalten ist. Bei dieser Anordnung drehen sich der Lenkerarm und der Antriebsstrang zum Endabtrieb um dieselbe Drehachse. Dadurch werden Längendifferenzen bei Ein- und Ausfederbewegungen des Lenkerarms zwischen dem Lenkerarm und dem Antriebsstrang am Endabtrieb vermieden. Verschleißanfällige Bauteile, mit denen eine Längendifferenz ausgeglichen werden könnte, können bei dieser Konstruktion entfallen.

Die Gesamtkonstruktion ist dadurch leichter und kostengünstiger. Verspannungen im Antriebsstrang werden vermieden.

Nach einer Ausgestaltung der Erfindung ist der zumindest eine elektrische Antriebsmotor fest mit dem Rahmen verbunden. Durch die rahmenfeste Verbindung werden die ungefederten Massen möglichst klein gehalten. Die Abtriebswelle des elektrischen Antriebsmotors ist bei einer festen Verbindung mit dem Rahmen in ihrer Lage fix, wodurch sich für den Antriebsstrang definierte geometrische Verhältnisse für die Überbrückung des Abstands zwischen der Abtriebswelle und dem Endabtrieb ergeben.

Nach einer Ausgestaltung der Erfindung ist der Antriebsstrang in den Lenkerarm integriert. Durch die Kombination des Lenkerarms und des Antriebsstrangs in einem Bauteil wird die Komplexität des Fahrwerks reduziert. Über den sowieso für den Lenkerarm benötigten Bauraum hinaus wird kaum zusätzlicher Bauraum unterhalb des Rahmens beansprucht. Auch das Gewicht der ungefederten Massen wird möglichst gering gehalten. Es sind auch keine zusätzlichen Antriebswellen erforderlich.

Nach einer Ausgestaltung der Erfindung sind im Antriebsstrang mehrere Zahnradstufen angeordnet, mit denen die Abtriebsdrehzahl des elektrischen Antriebsmotors bis zum Endabtrieb reduziert ist. Über beispielsweise zwei bis vier Getriebestufen im Antriebsstrang können Übersetzungsverhältnisse zwischen i = 1:4 bis i = 1:32 über alle Getriebestufen realisiert werden. Eine Anzahl von Zahnradstufen ist leicht in den Lenkerarm oder ein anderes Getriebegehäuse integrierbar. Wegen der in einem geschlossenen Gehäuse angeordneten Zahnradstufen kann auf Antriebswellen verzichtet werden. Die Zahnradstufen können im Lenkerarm oder im Getriebegehäuse beölt werden und zeichnen sich durch eine hohe Zuverlässigkeit, einen geringen Wartungsbedarf und eine hohe Standfestigkeit aus.

Nach einer Ausgestaltung der Erfindung ist über eine Zahnradstufe ein Versatz im Kraftfluss des Antriebsstrangs in einer Richtung quer zur Haupterstreckungsrichtung des Lenkerarms realisiert. Ein solcher Versatz ist beispielsweise möglich, indem zwei Zahnräder nebeneinander auf einer gemeinsamen Welle angeordnet sind. Die Antriebskraft wird über das erste Zahnrad auf die gemeinsame Welle und von dort auf das zweite Zahnrad übertragen, nur das zweite Zahnrad gibt die Antriebskraft auf nachgeordnete Antriebselemente weiter. Über einen solchen Versatz im Kraftfluss ist es möglich, die Antriebskraft vom elektrischen Antriebsmotor zunächst seitlich versetzt neben einem benachbarten Lagerbock in den Antriebsstrang einzuleiten, um dann den Kraftfluss des Antriebsstrangs im Bereich des Versatzes näher an die Haupterstreckungsrichtung des Lenkerarms heranzuführen. Je dichter der Kraftfluss des Antriebsstrangs und die Haupterstreckungsrichtung des Lenkerarms beieinanderliegen, umso kompakter kann der Lenkerarm und der Antriebsstrang ausgeführt werden. Auch sind die einwirkenden Kräfte besser beherrschbar, wenn der Kraftfluss des Antriebsstrangs und die Haupterstreckungsrichtung des Lenkerarms nicht weit auseinanderliegen. Wenn kein Versatz im Kraftfluss des Antriebsstrangs in einer Richtung quer zur Haupterstreckungsrichtung des Lenkerarms gewünscht ist, kann der Elektromotor auch beispielsweise direkt auf die Drehachse des Lenkerarms aufgesetzt sein und mit seiner Abtriebswelle direkt auf einen im Lenkerarm befindlichen Antriebsstrang einwirken, der ohne einen seitlichen Versatz in der Haupterstreckungsrichtung des Lenkerarms verläuft.

Nach einer Ausgestaltung der Erfindung ist der Radkopf nicht einstückig mit dem Lenkerarm verbunden. Wenn der Radkopf als ein getrenntes Teil ausgeführt ist, der kein Bestandteil einer Guss- oder Schweißkonstruktion ist, kann dieser im Reparaturfall leicht demontiert werden. Eventuelle Lagerschäden sind dann beispielsweise leicht behebbar.

Nach einer Ausgestaltung der Erfindung sind die Lenkerarme in einem Abstand zur Drehachse durch ein Achsrohr miteinander verbunden. Über ein Achsrohr können sich die beiden Lenkerarme in einer Richtung quer zur Längserstreckungsrichtung des Nutzfahrzeugs gegenseitig abstützen. Über das Achsrohr ist auch die Spurführung des Nutzfahrzeugs verbessert.

Es wird darauf hingewiesen, dass der Gegenstand des Anspruchs 1 mit den Merkmalen jedes einzelnen der Unteransprüche, aber auch mit einer beliebigen Kombination der Unteransprüche kombiniert werden kann, soweit dem keine technischen Hinderungsgründe entgegenstehen.

Weitere Abwandlungen und Ausgestaltungen der Erfindung ergeben sich aus der nachfolgenden gegenständlichen Beschreibung, den Ansprüchen sowie den Zeichnungen.

Die Erfindung soll anhand eines Ausführungsbeispiels näher erläutert werden. Es zeigen:
- Fig. 1:: eine ausschnittweise Seitenansicht auf ein Nutzfahrzeug, und
- Fig. 2:: eine Ansicht von oben auf den Zusammenbau eines Lenkerarms mit einem elektrischen Antriebsmotor.

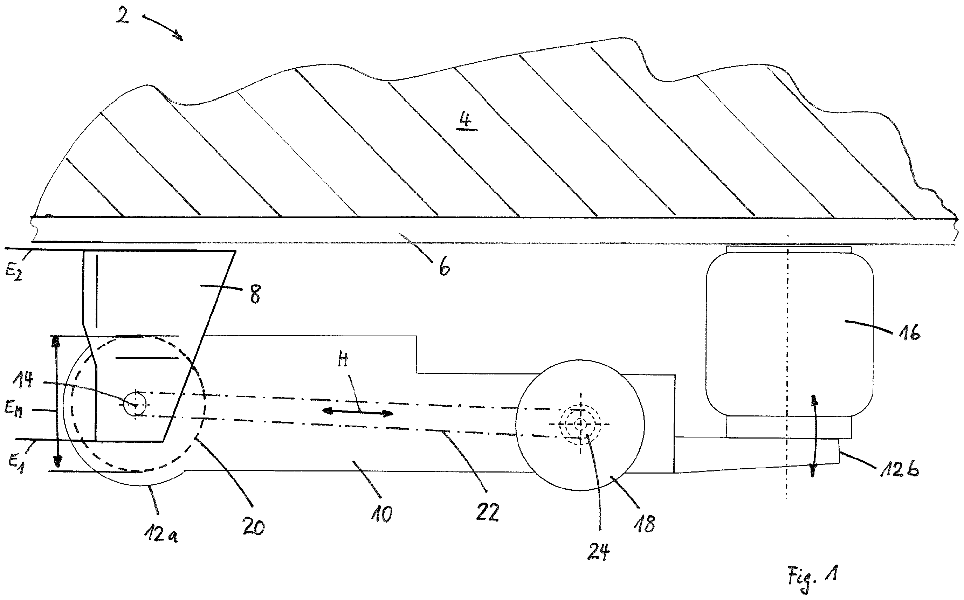

Die Fig. 1 zeigt eine ausschnittweise Seitenansicht von außen auf ein Nutzfahrzeug 2. In der Seitenansicht ist ein Teil der Seitenwand 4 zu sehen, die sich über den Rahmen 6 erhebt. Am Rahmen 6 ist der Lagerbock 8 befestigt, in dem der Lenkerarm 10 mit seinem ersten distalen Ende 12a um eine Drehachse 14 schwenkbeweglich gelagert ist. Die Haupterstreckungsrichtung H des Lenkerarms 10 ist in Fig. 1 durch einen Doppelpfeil angedeutet. Die in Fig. 1 gezeigte Anordnung des Lagerbocks 8 mit dem Lenkerarm 10 findet sich auf beiden Seiten des Nutzfahrzeugs 2 für eine Fahrzeugachse. Bei mehreren Achsen, die in einem Nutzfahrzeug 2 verbaut sind, können entsprechende Konstruktionen mit Lagerböcken 8 und Lenkerarmen 10 für jede weitere Achse vorhanden sein. Am zweiten distalen Ende 12b des Lenkerarms 10 befindet sich ein Federelement 16, gegen das der Lenkerarm 10 bei einer Einfederbewegung um die Drehachse 14 drückt oder von dem sich der Lenkerarm 10 bei einer Ausfederbewegung wegbewegt, wie durch den Doppelpfeil am Ende 12b angedeutet.

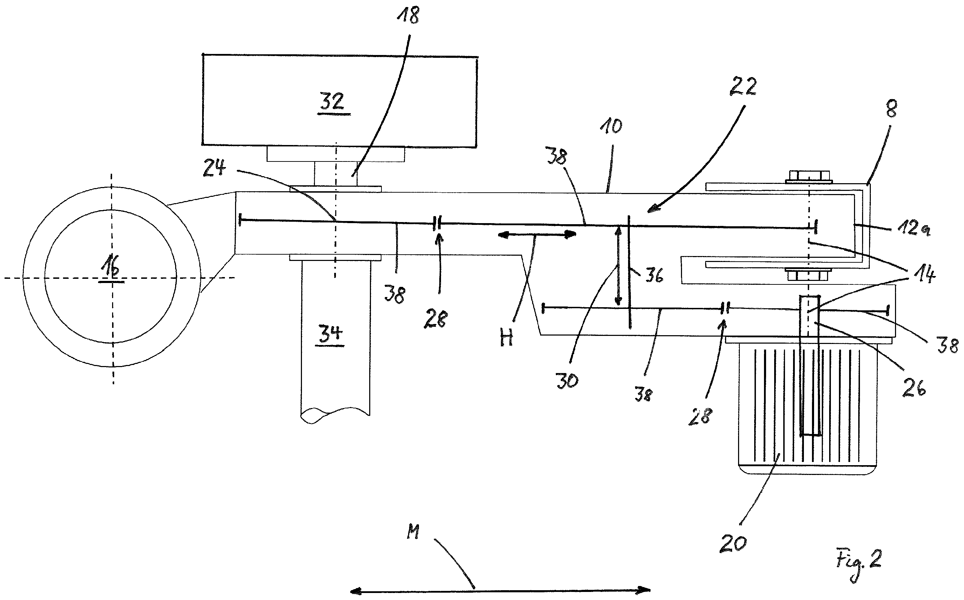

Mit einem jeweiligen Lenkerarm 10 sind in einem Abstand zur Drehachse 14 Radköpfe 18 fest verbunden. An einen Radkopf 18 kann ein in Fig. 2 dargestelltes Rad 32 angeschraubt werden.

Die Antriebskraft zum Antrieb des Rades 32 wird im Ausführungsbeispiel vom elektrischen Antriebsmotor 20 erzeugt. In Fig. 1 ist der elektrische Antriebsmotor 20 als gestrichelter Kreis dargestellt. Der elektrische Antriebsmotor 20 ist in einer Höhenlage Ein angeordnet, in der sich dieser zumindest teilweise auf der Höhenlage E₁, E₂ des Lagerbocks 8 befindet, wobei die Höhe E₁ der tiefste Punkt ist, bist zu dem sich der Lagerbock 8 nach unten hin erstreckt, und die Höhe E₂ der höchste Punkt ist, bis zu dem sich der Lagerbock 8 erstreckt. Aus der Ansicht in Fig. 1 ist erkennbar, dass sich die Höhenlagen des Lagerbocks 8 und des elektrischen Antriebsmotors 20 teilweise, im gezeigten Ausführungsbeispiel sogar fast vollständig überdecken.

Die vom elektrischen Antriebsmotor 20 erzeugte Antriebsenergie wird über den Antriebsstrang 22, der in Fig. 1 durch strichpunktierte Linien angedeutet ist, bis zum Endabtrieb 24 übertragen.

Ein Beispiel für einen Antriebsstrang 22 ist in Fig. 2 näher dargestellt. Die Fig. 2 zeigt eine Ansicht von oben auf den Zusammenbau eines Lenkerarms 10 mit einem elektrischen Antriebsmotor 20. Aus der Ansicht von oben ist erkennbar, dass der zumindest eine elektrische Antriebsmotor 20 seitlich versetzt neben einem benachbarten Lagerbock 8 auf dessen zur Längsmittelachse M des Nutzfahrzeugs 2 gerichteten Seite angeordnet ist. Der elektrische Antriebsmotor 20 ist mit einer Ausrichtung im Nutzfahrzeug 2 angeordnet, in der sich dessen Abtriebswelle 26 in einer Richtung quer zur Längsmittelachse M des Nutzfahrzeugs 2 erstreckt. Die Längsmittelachse M ist in Fig. 2 nur schematisch eingezeichnet. Die Abtriebswelle 26 des elektrischen Antriebsmotors 20 ist im gezeigten Ausführungsbeispiel konzentrisch zur Drehachse 14, um die der Lenkerarm 10 schwenkbeweglich im Lagerbock 8 gehalten ist. Der elektrische Antriebsmotor 20 kann fest mit dem Rahmen 6 verbunden sein, was in Fig. 2 aber nicht näher dargestellt ist.

Aus der Ansicht von oben ist auch erkennbar, dass der Antriebsstrang 22 vom elektrischen Antriebsmotor 20 aus zumindest abschnittweise entlang der Haupterstreckungsrichtung H, die auch in Fig. 2 durch einen Doppelpfeil kenntlich gemacht ist, des mit dem benachbarten Lagerbock 8 verbundenen Lenkerarms 10 verläuft. In dem in Fig. 2 dargestellten Ausführungsbeispiel wird die vom elektrischen Antriebsmotor 20 erzeugte Antriebskraft von der Abtriebswelle 26 an den Antriebsstrang 22 abgegeben. Der Antriebsstrang 22 besteht im Ausführungsbeispiel aus vier Zahnrädern 38, die paarweise miteinander über zwei Zahnradstufen 28 kämmen. Mit den Zahnrädern 38 und den mehreren Zahnradstufen 28 kann die Abtriebsdrehzahl des elektrischen Antriebsmotors 20 bis zum Endabtrieb 24 reduziert werden, sodass die vom Endabtrieb 24 angetriebenen Räder 32 langsamer drehen als die Abtriebswelle 26 des elektrischen Antriebsmotors 10.

Während sich das erste Paar der miteinander kämmenden Zahnräder 38 in einem Seitenast zum Lenkerarm 10 befindet, ist das zweite Paar der miteinander kämmenden Zahnräder 38 im Lenkerarm 10 angeordnet. Der Antriebsstrang 22 ist zumindest in diesem Abschnitt in den Lenkerarm 10 integriert.

Über die Zwischenwelle 36, auf die zwei Zahnräder 38 drehfest aufgesetzt sind, wird ein seitlicher Versatz 30 im Kraftfluss des Antriebsstrangs 22 in einer Richtung quer zur Haupterstreckungsrichtung H des Lenkerarms 10 geschaffen. Der Versatz 30 befindet sich zwischen zwei Zahnradstufen 28.

Die Lenkerarme 10 einer Achse können in einem Abstand zur Drehachse 14 durch ein Achsrohr 34 miteinander verbunden sein

Die Erfindung ist nicht auf das vorstehend beschriebene Ausführungsbeispiel beschränkt. Einem Fachmann bereitet es keine Schwierigkeiten, mit seinem Fachwissen das vorstehend beschriebene Ausführungsbeispiel auf eine ihm als geeignet erscheinende Weise abzuwandeln, um es an einen konkreten Anwendungsfall anzupassen.

### Bezugszeichenliste

- 2: Nutzfahrzeug
- 4: Seitenwand
- 6: Rahmen
- 8: Lagerbock
- 10: Lenkerarm
- 12: Ende
- 14: Drehachse
- 16: Federelement
- 18: Radkopf
- 20: Antriebsmotor
- 22: Antriebsstrang
- 24: Endabtrieb
- 26: Abtriebswelle
- 28: Zahnradstufe
- 30: Versatz
- 32: Rad
- 34: Achsrohr
- 36: Zwischenwelle
- 38: Zahnrad
- E: Höhenlage
- H: Haupterstreckungsrichtung
- M: Längsmittelachse

## Patentansprüche

1. Nutzfahrzeug (2) mit einem Rahmen (6), zumindest zwei beabstandet zueinander angeordneten Lenkerarmen (10), die jeweils an einem ersten distalen Ende (12) um eine Drehachse (14) schwenkbeweglich an einem ortsfest mit dem Rahmen (6) verbundenen Lagerbock (8) gehalten sind, Radköpfen (18), die mit einem jeweiligen Lenkerarm (10) in einem Abstand zur Drehachse (14) fest verbunden sind, Rädern (32), die mit einem jeweiligen Radkopf (18) verbunden sind, zumindest einem Endabtrieb (24) an den Radköpfen (18) für den Antrieb der Räder (32), zumindest einem elektrischen Antriebsmotor (20), und zumindest einem Antriebsstrang (22), der sich vom elektrischen Antriebsmotor (20) bis zum Endabtrieb (24) erstreckt, **dadurch gekennzeichnet, dass** der zumindest eine elektrische Antriebsmotor (20) in einer Höhenlage (E_{M}) angeordnet ist, in der sich dieser zumindest teilweise auf der Höhenlage (E₁, E₂) der Lagerböcke (8) befindet, der zumindest eine elektrische Antriebsmotor (20) seitlich versetzt neben einem benachbarten Lagerbock (8) auf dessen zur Längsmittelachse (M) des Nutzfahrzeugs (2) gerichteten Seite angeordnet ist, und der Antriebsstrang (22) von dem zumindest einen elektrischen Antriebsmotor (20) aus zumindest abschnittweise entlang der Haupterstreckungsrichtung (H) des mit dem benachbarten Lagerbock (8) verbundenen Lenkerarms (10) verläuft.

2. Nutzfahrzeug (2) nach Anspruch 1, **dadurch gekennzeichnet, dass** der zumindest eine elektrische Antriebsmotor (20) mit einer Ausrichtung im Nutzfahrzeug (2) angeordnet ist, in der sich dessen Abtriebswelle (26) in einer Richtung quer zur Längsmittelachse (M) des Nutzfahrzeugs (2) erstreckt, und die Abtriebswelle (26) des elektrischen Antriebsmotors (20) konzentrisch ist zur Drehachse (14), um die der Lenkerarm (10) schwenkbeweglich im Lagerbock (8) gehalten ist.

3. Nutzfahrzeug (2) nach Anspruch 1 oder 2, **dadurch gekennzeichnet, dass** der zumindest eine elektrische Antriebsmotor (20) fest mit dem Rahmen (6) verbunden ist.

4. Nutzfahrzeug (2) nach einem der vorhergehenden Ansprüche, **dadurch gekennzeichnet, dass** der Antriebsstrang (22) in den Lenkerarm (10) integriert ist.

5. Nutzfahrzeug (2) nach einem der vorhergehenden Ansprüche, **dadurch gekennzeichnet, dass** im Antriebsstrang (22) mehrere Zahnradstufen (28) angeordnet sind, mit denen die Abtriebsdrehzahl des elektrischen Antriebsmotors (20) bis zum Endabtrieb (24) reduziert ist.

6. Nutzfahrzeug (2) nach Anspruch 5, **dadurch gekennzeichnet, dass** über eine Zahnradstufe (28) ein Versatz (30) im Kraftfluss des Antriebsstrangs (22) in einer Richtung quer zur Haupterstreckungsrichtung (H) des Lenkerarms (10) realisiert ist.

7. Nutzfahrzeug (2) nach einem der vorhergehenden Ansprüche, **dadurch gekennzeichnet, dass** der Radkopf (18) nicht einstückig mit dem Lenkerarm (10) verbunden ist.

8. Nutzfahrzeug (2) nach einem der vorhergehenden Ansprüche, **dadurch gekennzeichnet, dass** die Lenkerarme (10) in einem Abstand zur Drehachse (14) durch ein Achsrohr (34) miteinander verbunden sind.
